# EUROPÄISCHE PATENTSCHRIFT

(11) **EP 0 855 259 B1**
(45) Veröffentlichungstag und Bekanntmachung des Hinweises auf die Patenterteilung: **17.04.2002**
(21) Anmeldenummer: 98100343.7
(22) Anmeldetag: 10.01.1998
(51) Int. Cl.: B29C 44/46

(54) **Verfahren und Vorrichtung zur kontinuierlichen Herstellung von Polyurethan-Blockschaum**
Method and apparatus for continuous manufacture of polyurethane foam blocks
Procédé et dispositif pour la production en continu de blocs en mousse de polyuréthane

(30) Priorität: 24.01.1997 DE 19702433
(43) Veröffentlichungstag der Anmeldung: 29.07.1998
(73) Patentinhaber: Hennecke GmbH, 51379 Leverkusen (DE)
(72) Erfinder: Sulzbach, Hans-Michael, 53639 Königswinter (DE); Steilen, Herbert, 53639 Königswinter (DE)
(74) Vertreter: Drope, Rüdiger, Dr.

(56) Entgegenhaltungen:
- EP-A- 0 021 159
- EP-A- 0 689 920
- DE-A- 1 778 946
- US-A- 5 063 873

## Beschreibung

Die vorliegende Erfindung betrifft ein Verfahren zur kontinuierlichen Herstellung von Polyurethan-Blockschaum durch Aufbringen einer Polyurethan-Reaktivmischung in Form eines Flüssigschaumes aus einer im wesentlichen punkt- bzw. rotationssymmetrischen Quelle auf das Transportband einer Blockschaumanlage. Ein solches Verfahren ist beispielsweise in der WO 96/16782 und der nicht vorveröffentlichten europäischen Patentanmeldung 96 116 053.8 bzw. der deutschen Patentanmeldung 19 627 065.0 offenbart, wobei eine Kohlendioxid unter Druck gelöst enthaltende Polyurethan-Reaktivmischung unter Ausbildung eines Flüssigschaumes entspannt und auf das Transportband einer Blockschaumanlage aufgebracht wird. Dabei kann das Transportband eine Breite von bis zu 2,2 m oder mehr aufweisen.

Ein Problem ist die Querverteilung des Flüssigschaumes (Froth) über die Breite des Transportbandes.

Zur Lösung des Problems wurde gemäß europäischer Patentanmeldung 95 109 419.2 bereits vorgeschlagen, das Umlenkelement für die Zufuhr der oberen Kaschierfolie flächig auszubilden, so dass zwischen oberer und unterer Kaschierfolie ein Kanal mit im wesentlichen konstantem Querschnitt (oder gemäß EP-A 21 564 mit sich verengendem Querschnitt) gebildet wird, in dem der Flüssigschaum unter Ausbildung eines Stauhaufens vor Eintritt in den Kanal über die Breite des Transportbandes verteilt wird.

Durch die Querverteilung unter Einsatz der oberen Kaschierfolie wird ein Anhaften und Aushärten der Polyurethan-Reaktivmischung an dem Querverteilorgan vermieden, da die Oberfläche des Querverteilorgans ständig erneuert wird. Die gleichsinnige Bewegung von unterer und oberer Kaschierfolie fördert ferner den Einzug des Flüssigschaumes in den Kanal, wobei ein wesentlicher Beitrag zur Querverteilung innerhalb des Kanals erfolgt. Hierdurch wird einem "Altern" des Flüssigschaumes in dem Stauhaufen vor dem Kanal entgegengewirkt.

Unbefriedigend an dieser Lösung ist das Erfordernis der Mitverwendung einer oberen Kaschierfolie bzw. mindestens einer umlaufenden Folie, die jeweils von anhaftendem Polyurethan befreit werden muss. Gemäß DE-A 1 778 946 sollen solche umlaufenden Folien eine Antihaftschicht auf Basis Polyethylen, Silicon oder dergleichen aufweisen.

Entgegen jeder Erwartung des Fachmannes wurde nun gefunden, dass die Querverteilung des Flüssigschaumes mittels einer einfachen feststehenden, sich quer über das Transportband erstreckenden Platte, die gegen das Transportband derart schräg angestellt ist, dass ein sich verengender Kanal gebildet wird, erzielt werden kann, ohne dass an der Platte störende Anbackungen gebildet werden. Die Oberfläche der Platte besteht aus einem von der Reaktivmischung nur schwer benetzbaren Material, wie Polyethylen oder Polytetrafluorethylen. Diese Erkenntnis steht im Gegensatz zur Erfahrung mit nicht vorgeschäumten Polyurethan-Reaktivmischungen. Letztere führen auch an selbsttrennenden Materialien innerhalb weniger Minuten zu Anbackungen, die - einmal vorhanden - sehr schnell anwachsen. Ferner wurde gefunden, dass die fehlende Einzugswirkung der feststehenden Platte nicht zu einer für den herzustellenden Polyurethan-Schaum nachteiligen Altersverteilung durch Stau vor der Platte führt, wenn der Anstellwinkel der Platte gegen das untere Transportband 20 bis 60° beträgt.

Gegenstand der vorliegenden Erfindung ist demgemäß weiterhin ein Verfahren zur kontinuierlichen Herstellung von Polyurethan-Blockschaum durch Aufbringen einer Polyurethan-Reaktivmischung in Form eines Flüssigschaumes aus einer im wesentlichen punktförmigen Quelle auf das Transportband einer Blockschaumanlage und Verteilen des Flüssigschaumes quer über die Breite des Transportbandes mittels einer oberhalb des Transportbandes angeordneten, mit diesem einen Verteilspalt bildenden Verteileinrichtung, die dadurch gekennzeichnet ist, dass die Verteileinrichtung in Form einer Platte, deren Oberfläche aus gegenüber der Polyurethan-Reaktivmischung selbsttrennendem Material besteht, ausgebildet ist, wobei die Platte unter einem Winkel von 20 bis 60° gegen die Transportbandmittellinie schräg angestellt ist und auf der Zufuhrseite des Flüssigschaumes keilförmig ausgebildet ist, wobei der Grat des Keiles in der Mittelebene des Transportbandes verläuft und sich in Transportband-Richtung diesem annähnert.

Gegenstand der vorliegenden Erfindung ist auch eine Vorrichtung zur kontinuierlichen Herstellung von Polyurethan-Blockschaum in einer an sich bekannten Blockschaumanlage, wobei die Anlage eine oberhalb des Transportbandes angeordnete, im wesentlichen punktförmige Zufuhreinrichtung für Polyurethan-Reaktivmischung-Flüssigschaum und eine mit dem Transportband einen Verteilspalt bildende Einrichtung zur Verteilung des Flüssigschaums quer über die Breite des Transportbandes enthält, wobei die Verteileinrichtung in Form einer Platte, deren Oberfläche aus gegenüber der Polyurethan-Reaktivmischung selbsttrennendem Material besteht, ausgebildet ist, wobei die Platte unter einem Winkel von 20 bis 60° gegen die Transportband-Mittellinie schräg angestellt ist und auf der Zufuhrseite des Flüssigschaumes keilförmig ausgebildet ist, wobei der Grat des Keiles in der Mittelebene des Transportbandes verläuft und sich in Transportband-Richtung diesem annähert.

Die Querverteileinrichtung kann aus einer entsprechend geformten Platte bestehen, die mit einer von dem Polyurethan-Flüssigschaum nicht benetzbaren Folie aus Polyethylen oder Polytetrafluorethylen überzogen ist. Vorzugsweise wird die selbsttrennende Folie mit entsprechenden Spannelementen über das Querverteilungselement gespannt, so dass die Folie in Anlagenstillstandszeiten erneuert werden kann.

Der Öffnungswinkel des Keiles beträgt vorzugsweise 120 bis 150°. Der Grat des Keiles bildet vorzugsweise mit der Mittellinie des Transportbandes einen Winkel von 40 bis 60°.

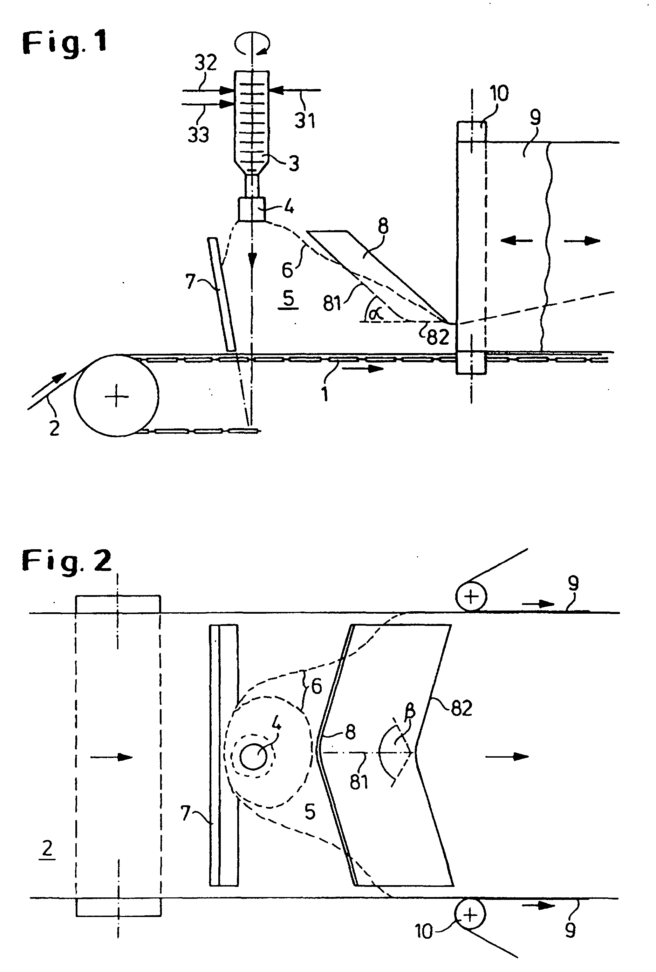

Die Erfindung wird nachfolgend anhand der beigefügten Fig. 1 bis 4 näher erläutert:
Fig. 1 zeigt das Transportband 1 einer Blockschaumanlage. Auf das Transportband wird die untere Kaschierfolie 2 aufgebracht. Oberhalb des Transportbandes befindet sich der Mischkopf 3, in den Polyisocyanat, Polyol und gegebenenfalls weitere Zusatz- und Hilfsstoffe über die Leitungen 31, 32 und 33 eingeleitet werden. In der Polyolkomponente ist das Treibgas, insbesondere CO₂, gelöst. Die Polyurethan-Reaktivmischung verlässt den Mischkopf 3 über das Entspannungsorgan 4, in dem die Reaktivmischung durch eines oder mehrere Siebe gedrückt wird, in Form eines Flüssigschaumes, der durch die Konturlinie 6 angedeutet ist. Eine ortsfeste Platte 7 verhindert das Zurückfließen des Schaumes gegen die Förderrichtung des Transportbandes 1. Femer werden über Umlenkrollen 10 seitliche Kaschierfolien 9 zugeführt. Erfindungsgemäß ist nun ein Querverteilelement 8 vorgesehen, wobei die sich quer über das Transportband erstreckende, keilförmig ausgebildete Platte 8 einen Winkel α von vorzugsweise 20 bis 45° mit der Parallelen zur Transportband-Mittellinie bildet. Der Grat 81 des Keiles bildet vorzugsweise einen Winkel α von 40 bis 60° mit der Parallelen zur Transportband-Mittellinie. Der Keilwinkel β (Fig. 2) beträgt vorzugsweise 120 bis 150°. Die dem Transportband zugewandte, bezüglich der Flüssigschaumzufuhr rückseitige Kante 82 der Verteileinrichtung 8 bildet mit dem Transportband einen Spalt konstanter Breite.
Fig. 2 zeigt eine Draufsicht auf die Vorrichtung gemäß Fig. 1. Gleiche Bezugszeichen bezeichnen gleiche Elemente.

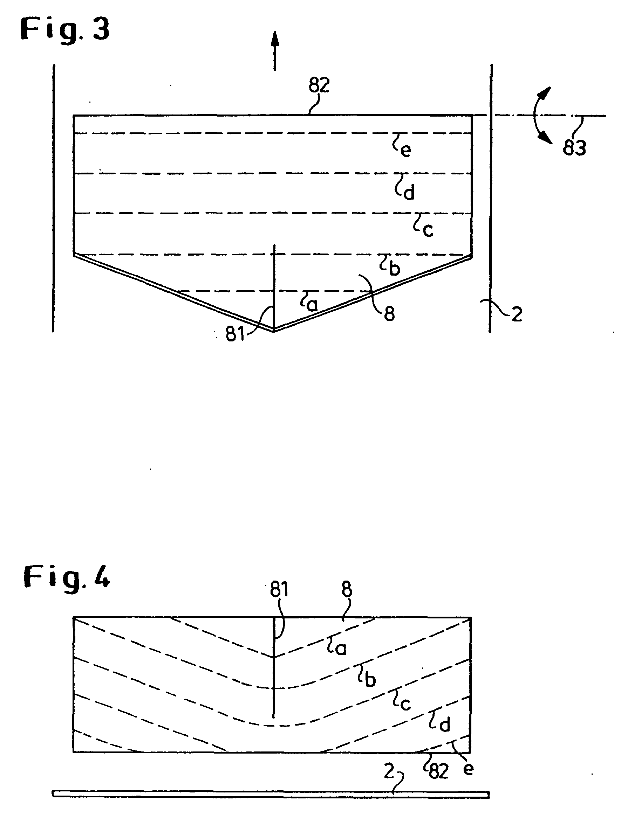

Fig. 3 und 4 zeigen ein besonders bevorzugtes Querverteilelement, wobei Fig. 3 eine Draufsicht darstellt und Fig. 4 eine Ansicht in Richtung des Transportbandes. Die strichlierten Linien a bis e stellen Linien gleichen Ortes quer zur Transportband-Richtung dar. Eintrittsseitig trifft der Flüssigschaum auf den Grat 81 der keilförmigen Querverteilvorrichtung. In der bevorzugten Ausführungsform ist die Austrittskante 82 als quer zum Transportband verlaufende, gerade Linie ausgebildet. Vorzugsweise ist die Verteileinrichtung um eine Achse 83 schwenkbar ausgebildet, so dass eine Justierung zur optimalen Querverteilung des Flüssigschaums ermöglicht wird. Ferner ist die Querverteileinrichtung 8 an einer nicht gezeigten Halterung bezüglich ihres Abstandes von dem Transportband höhenverstellbar ausgebildet.

## Patentansprüche

1. Verfahren zur kontinuierlichen Herstellung von Polyurethan-Blockschaum durch Aufbringen einer Polyurethan-Reaktivmischung in Form eines Flüssigschaumes aus einer im wesentlichen rotationssymmetrischen Quelle auf das Transportband einer Blockschaumanlage und Verteilen des Flüssigschaumes quer über die Breite des Transportbandes mittels einer oberhalb des Transportbandes angeordneten, mit diesem einen Verteilspalt bildenden Verteileinrichtung, **dadurch gekennzeichnet, dass** die Verteileinrichtung in Form einer Platte, deren Oberfläche aus gegenüber der Polyurethan-Reaktivmischung selbsttrennendem Material besteht, ausgebildet ist, wobei die Platte unter einem Winkel von 20 bis 60° gegen die Transportbandmittellinie schräg angestellt ist und die Verteileinrichtung auf der Zufuhrseite des Flüssigschaumes keilförmig ausgebildet ist, wobei der Grat des Keiles in der Mittelebene des Transportbandes verläuft und sich in Transportband-Richtung diesem annähert.

2. Verfahren nach Anspruch 1, **dadurch gekennzeichnet, dass** die Auslassseite des Verteilspaltes durch eine zum Transportband parallele, sich quer über das Transportband erstreckende Linie gebildet wird.

3. Verfahren nach Anspruch 1 oder 2, **dadurch gekennzeichnet, dass** die Verteileinrichtung um eine sich quer über das Transportband zu dieser parallelen Achse schwenkbar ausgebildet ist.

4. Verfahren nach einem der Ansprüche 1 bis 3, **dadurch gekennzeichnet, dass** die Verteileinrichtung gegenüber dem Transportband höhenverstellbar ausgebildet ist.

5. Vorrichtung zur kontinuierlichen Herstellung von Polyurethan-Blockschaum in einer an sich bekannten Blockschaumanlage, enthaltend eine oberhalb des Transportbandes angeordnete, im wesentlichen rotationssymmetrische Zufuhreinrichtung für Polyurethan-Reaktivmischung-Flüssigschaum und eine mit dem Transportband einen Verteilspalt bildende Einrichtung zur Verteilung des Froth über die Breite des Transportbandes, **dadurch gekennzeichnet, dass** die Verteileinrichtung in Form einer Platte, deren Oberfläche aus gegenüber der Polyurethan-Reaktivmischung selbsttrennendem Material besteht, ausgebildet ist, wobei die Platte unter einem Winkel von 20 bis 60° gegen die Transportband-Mittellinie schräg angestellt ist und auf der Zufuhrseite des Flüssigschaumes keilförmig ausgebildet ist, wobei der Grat des Keiles in der Mittelebene des Transportbandes, sich diesem in Transportrichtung annähernd, verläuft.

6. Vorrichtung nach Anspruch 5, **dadurch gekennzeichnet, dass** die Breite der Verteileinrichtung verstellbar ist.

7. Vorrichtung nach Anspruch 5 oder 6, **dadurch gekennzeichnet, dass** die Position der Verteileinrichtung in Transportrichtung verstellbar ist.

## Claims

1. Process for the continuous production of polyurethane slabstock foam by applying a polyurethane reactive mixture in the form of a liquid foam from a substantially rotationally symmetrical source onto the conveyor belt of a slabstock foam plant and distributing the liquid foam transversely across the width of the conveyor belt by means of a distribution device arranged above the conveyor belt, with which it forms a distribution slot, **characterised in that** the distribution device is in form of a plate, the surface of which consists of a material which has self-releasing properties towards the polyurethane reactive mixture, wherein the plate is arranged obliquely at an angle of 20 to 60° relative to the conveyor belt centre line and the distribution device is wedge-shaped on the liquid foam feed side, wherein the ridge of the wedge extends in the central plane of the conveyor belt and, in the direction of the conveyor belt, converges therewith.

2. Process according to claim 1, **characterised in that** the outlet side of the distribution slot is formed by a line parallel to the conveyor belt extending transversely across the conveyor belt.

3. Process according to claim 1 or 2, **characterised in that** the distribution device is arranged pivotably around an axis above and parallel to the conveyor belt.

4. Process according to one of claims 1 to 3, **characterised in that** the distribution device may be adjusted in height relative to the conveyor belt.

5. Apparatus for the continuous production of polyurethane slabstock foam in a *per se* known slabstock foam plant containing a substantially rotationally symmetrical feed device for polyurethane reactive mixture liquid foam arranged above the conveyor belt and a device forming a distribution slot with the conveyor belt to distribute the froth across the width of the conveyor belt, **characterised in that** the distribution device is in the form of a plate, the surface of which consists of a material having self-releasing properties towards the polyurethane reactive mixture, wherein the plate is adjusted obliquely at an angle of 20 to 60° relative to the conveyor belt centre line and the distribution device is wedge-shaped on the liquid foam feed side, wherein the ridge of the wedge extends in the central plane of the conveyor belt and, in the direction of the conveyor belt, converges therewith.

6. Apparatus according to claim 5, **characterised in that** the width of the distribution device is adjustable.

7. Apparatus according to claim 5 or 6, **characterised in that** the position of the distribution device is adjustable in the conveying direction.

## Revendications

1. Procédé pour la préparation continue de blocs de mousse de polyuréthanne par application d'un mélange réactif de polyuréthanne dans la forme d'une mousse liquide provenant d'une source essentiellement à symétrie de révolution sur le tapis roulant d'une installation de production de blocs de mousse et par distribution de la mousse liquide à travers la largeur du tapis roulant au moyen d'un dispositif de distribution disposé au-dessus du tapis roulant, formant avec celui-ci une fente de distribution, **caractérisé en ce que** le dispositif de distribution est dans la forme d'une plaque dont la surface est constituée d'un matériau se séparant automatiquement du mélange réactif de polyuréthanne, la plaque étant disposée de manière inclinée sous un angle de 20 à 60° par rapport à la ligne médiane du tapis roulant et le dispositif de distribution formant une cale sur le côté d'introduction de la mousse liquide, l'arête de la cale se trouvant dans le plan médian du tapis roulant et se rapprochant de celui-ci dans la direction du tapis roulant.

2. Procédé selon la revendication 1, **caractérisé en ce que** le côté de sortie de la fente de distribution est formé par une ligne parallèle au tapis roulant s'étendant à travers le tapis roulant.

3. Procédé selon la revendication 1 ou 2, **caractérisé en ce que** le dispositif de distribution peut pivoter autour d'un axe s'étendant à travers le tapis roulant, parallèle à celui-ci.

4. Procédé selon l'une quelconque des revendications 1 à 3, **caractérisé en ce que** le dispositif de distribution peut être réglé en hauteur par rapport au tapis roulant.

5. Appareil pour la préparation continue de blocs de mousse de polyuréthanne dans une installation de production de blocs de mousse connue en elle-même comprenant un dispositif d'alimentation en mousse liquide de mélange réactif de polyuréthanne disposé au-dessus du tapis roulant, essentiellement à symétrie de révolution et un dispositif formant, avec le tapis roulant une fente de distribution pour la distribution de l'écume sur la largeur du tapis roulant, **caractérisé en ce que** le dispositif de distribution est dans la forme d'une plaque dont la surface est constituée d'un matériau se séparant automatiquement du mélange réactif de polyuréthanne, la plaque étant disposée de manière inclinée sous un angle de 20 à 60° par rapport à la ligne médiane du tapis roulant et formant une cale sur le côté d'introduction de la mousse liquide, l'arête de la cale se trouvant dans le plan médian du tapis roulant, se rapprochant de celui-ci dans la direction du transport.

6. Appareil selon la revendication 5, **caractérisé en ce que** la largeur du dispositif de distribution est réglable.

7. Appareil selon la revendication 5 ou 6, **caractérisé en ce que** la position du dispositif de distribution est réglable dans la direction du transport.
